# EUROPÄISCHE PATENTSCHRIFT

(11) **EP 0 913 179 B1**
(45) Veröffentlichungstag und Bekanntmachung des Hinweises auf die Patenterteilung: **16.03.2005**
(21) Anmeldenummer: 98101628.0
(22) Anmeldetag: 30.01.1998
(51) Int. Cl.: B01D 3/00

(54) **Flüssigkeitsverteiler für eine Stoffaustauschkolonne**
Liquid distribution for a mass transfer column
Dispositif de distribution de liquide pour une colonne d'échange de matière

(30) Priorität: 30.10.1997 DE 19748037
(43) Veröffentlichungstag der Anmeldung: 06.05.1999
(73) Patentinhaber: Linde Aktiengesellschaft, 65189 Wiesbaden (DE)
(72) Erfinder: Voggenreiter, Martin, 82547 Eurasburg (DE)
(74) Vertreter: Kasseckert, Rainer

(56) Entgegenhaltungen:
- EP-A- 0 783 911
- WO-A-88/02647
- AT-B- 209 881
- DE-A- 4 226 177
- FR-A- 2 153 337

## Beschreibung

Die Erfindung betrifft einen Flüssigkeitsverteiler für eine Stoffaustauschkolonne mit mindestens einem Verteilkanal, der mit einem Hauptkanal in Strömungsverbindung steht, und dessen Boden mit Flüssigkeitsaustrittsöffnungen versehen ist.

Derartige Verteiler werden zur Verteilung von Flüssigkeit über den Querschnitt einer Stoffaustauschkolonne, insbesondere oberhalb eines mit geordneter oder ungeordneter Packung ausgestatteten Abschnitts eingesetzt. Verschiedene Bauarten von Verteilern sind beispielsweise aus einem Aufsatz von P. Bomio et al., Chem. Tech., 43.Jg., Heft 11/12, 1991 bekannt und werden dort als Rohrverteiler, Elementverteiler oder Kanalverteiler bezeichnet. Diese Typen von Flüssigkeitsverteilern weisen horizontal ausgerichtete Verteilkanäle, die von mindestens einem Hauptkanal gespeist werden, der in der Regel senkrecht zu den Verteilkanälen verläuft. Der Hauptkanal sowie die Verteilkanäle sind meist gerade, können aber auch gekrümmt oder geknickt sein. Bei einem Rohrverteiler sind die Verteilkanäle an ihrer Oberseite geschlossen, bei einem Element- oder Kanalverteiler sind sie oben offen.

Das Ausströmen der Flüssigkeit aus den Verteilkanälen erfolgt häufig durch Öffnungen im Boden der Kanäle, so daß eine punktuelle Verteilung der Flüssigkeit über den Kolonnenquerschnitt erreicht wird. Derartige Verteiler werden auch als Lochverteiler bezeichnet. Die Güte der Verteilung hängt zum einen von der Lochzahl, zum anderen von der von den Verteilkanälen überdeckten Kolonnenfläche ab. Eine möglichst gleichmäßige Verteilung hat daher den Nachteil, daß eine große Kolonnenfläche von Verteilkanälen abgedeckt wird, wodurch der Widerstand für das der Flüssigkeit entgegenströmende Gas sehr hoch wird. Auch die Lochzahl kann nicht beliebig vergrößert werden, da bei einer steigenden Lochzahl der Lochdurchmesser entsprechend verringert werden muß, damit die Gesamtmenge an ausströmender Flüssigkeit konstant bleibt. Dies hat aber zur Folge, daß die Löcher durch Verunreinigungen schneller verstopfen können.

In der EP-B-0 282 753 wird daher ein Flüssigkeitsverteiler mit Verteilkanälen vorgeschlagen, wobei in einem bestimmten Abstand von zumindest einer Seitenwand jedes Verteilkanals eine Leitwand angeordnet ist. Die Seitenwand besitzt Austrittsöffnungen, durch die die Flüssigkeit aus dem Verteilkanal ausströmt, auf die Leitwand prallt und von dieser als Flüssigkeitsfilm abtropft. Auf diese Weise wird zwar eine feinere Verteilung der Flüssigkeit erzielt, durch die seitlich neben den Verteilkanälen angebrachten Leitwände wird allerdings der freie Querschnitt für den Gasdurchtritt eingeengt.

Vorliegender Erfindung liegt daher die Aufgabe zugrunde, einen Flüssigkeitsverteiler der eingangs genannten Art anzugeben, der eine feine Verteilung der Flüssigkeit ermöglicht und einen möglichst großen freien Querschnitt für das nach oben strömende Gas bietet.

Diese Aufgabe wird erfindungsgemäß dadurch gelöst, daß unter dem Verteilkanal genau ein Zusatzverteiler angeordnet ist, der als eine im wesentlichen parallel zur Längsachse des Verteilkanals und schräg zur Querachse des Verteilkanals angeordnete Leitwand oder als ein im wesentlichen parallel zur Längsachse des Verteilkanals angeordnetes, nach unten offenes U- oder V-förmiges Profil ausgebildet ist.

Die Mengenregelung der zu verteilenden Flüssigkeit erfolgt wie bisher mittels eines Lochverteilers. Erfindungsgemäß wird nun die aus den im Boden des Lochverteilers befindlichen Austrittsöffnungen ausströmende Flüssigkeit mittels eines unterhalb des Verteilkanals angeordneten Zusatzverteilers fein verteilt.

Aufgrund der hohen Verteilgüte des erfindungsgemäßen Flüssigkeitsverteilers kann auch die Anzahl der Verteilkanäle gegenüber den bisherigen Verteilern reduziert werden, so daß der freie Querschnitt für den Gasdurchtritt größer wird. Das nach oben strömende Gas wird weniger stark umgelenkt, wodurch unter anderem auch der gasseitige Druckabfall im Bereich des Verteilers minimiert wird.

Von Vorteil erfolgt die Feinverteilung so, daß anstelle der bei den bekannten Lochverteilem entstehenden punktuellen Verteilung die Flüssigkeit in Linien längs der Verteilkanäle über den Querschnitt der Kolonne verteilt wird.

Mit dem erfindungsgemäßen Flüssigkeitsverteiler wird so eine deutlich feinere und gleichmäßigere Verteilung der Flüssigkeit als mit herkömmlichen Lochverteilern erzielt, da gegenüber einem Flüssigkeitsstrahl pro Austrittsöffnung des Verteilkanals nunmehr zahlreiche feine Flüssigkeitsstrahlen pro Austrittsöffnung auf die Kolonne auftreffen. Die Anzahl der Flüssigkeitsaustrittsöffnungen in den Verteilkanälen kann deshalb drastisch reduziert werden, wodurch die Größe der Flüssigkeitsaustrittsöffnungen entsprechend erhöht werden kann. Verschmutzungen oder Verstopfungen der Austrittsöffnungen treten daher nur noch sehr selten auf.

Vorzugsweise überschreitet die Breite des Zusatzverteilers die des Verteilkanals nicht. In der Draufsicht wird der Zusatzverteiler durch den Flüssigkeitsverteiler vollkommen abgedeckt. Auf diese Weise wird der freie Querschnitt für das Gas durch den Zusatzverteiler nicht noch zusätzlich eingeengt.

Bevorzugt wird der Zusatzverteiler durch eine unter dem Verteilkanal im wesentlichen parallel zur Längsachse des Verteilkanals und schräg zur Querachse des Verteilkanals angeordnete Leitwand gebildet. Die aus den im Boden des Verteilkanals befindlichen Austrittsöffnungen ausströmende Flüssigkeit trifft auf die schräge Leitwand auf und fließt entlang dieser ab. Beim Aufprall der Flüssigkeitstropfen auf der Leitwand erhalten diese auch einen Impuls längs der Leitwand. Aufgrund dieser horizontalen Bewegungskomponenten fließt die Flüssigkeit nicht in einem Strahl nach unten ab, sondern weitet sich parabelförmig auf. Durch die Leitwand wird so der eine Flüssigkeitsstrahl aufgeteilt und tropft an der unteren Kante der Leitwand in Form von vielen, längs der Leitwand linienförmig verteilten Tropfen ab.

Besonders bevorzugt besitzt der Flüssigkeitsverteiler unter dem Verteilkanal ein im wesentlichen parallel zur Längsachse des Verteilkanals angeordnetes, nach unten offenes U- oder V-förmiges Profil. Die linienartige Verteilung der Flüssigkeit erfolgt hierbei analog zu der oben beschriebenen schräg angeordneten Leitwand. Zusätzlich wird Flüssigkeit, die auf den Scheitel bzw. die Spitze des U- oder V-förmigen Profils auftrifft, auf die beiden Schenkel des Profils verteilt, so daß die aus einer Lochreihe austretende Flüssigkeit auf zwei Linien verteilt wird.

Die Breite des auf der Leitwand bzw. den Seitenwänden, d. h. den Schenkeln, des U-oder V-förmigen Profils entstehenden parabelförmigen Strahlprofils hängt von deren Neigungswinkel ab. Vorzugsweise wird deshalb der Winkel der schrägen Leitwand bzw. der Winkel der beiden Schenkel des U- oder V-förmigen Profils zur Horizontalen so gewählt, daß sich die parabelförmigen Profile von zwei aus benachbarten Flüssigkeitsaustrittsöffnungen ausströmenden und auf der Leitwand bzw. den Seitenwänden verteilenden Flüssigkeitsstrahlen gerade berühren. Die Flüssigkeit wird dadurch in durchgehenden Linien über dem Querschnitt der Kolonne verteilt.

Durch die parabelförmige Verteilung der Flüssigkeit auf der Leitwand bzw. den Seitenwänden wird zwar eine Aufweitung des Flüssigkeitsstrahl erzielt, in der Regel fließt jedoch von der Mitte dieser parabelförmigen Verteilung mehr Flüssigkeit auf die Kolonne ab als von den Randbereichen. Die Flüssigkeit wird so zwar linienförmig auf die Kolonne aufgebracht, entlang dieser Linien wechseln sich jedoch Flüssigkeitsanhäufungen mit flüssigkeitsärmeren Bereichen ab. Besonders bevorzugt wird deshalb der Winkel der schrägen Leitwand bzw. der Winkel der beiden Schenkel des U- oder V-förmigen Profils zur Horizontalen so gewählt, daß sich die parabelförmigen Profile von zwei aus benachbarten Flüssigkeitsaustrittsöffnungen ausströmenden und auf der Leitwand bzw. den Seitenwänden verteilenden Flüssigkeitsstrahlen so überschneiden, daß entlang der über dem Querschnitt der Kolonne entstehenden Linien eine möglichst gleichmäßige Flüssigkeitsverteilung erreicht wird.

In zahlreichen Versuchen hat sich gezeigt, daß je nach Abstand der Flüssigkeitsaustrittsöffnungen untereinander der Winkel zwischen den beiden Schenkeln des U- oder V-förmigen Profils bevorzugt 45° bis 120°, besonders bevorzugt 60° bis 90° beträgt.

Es ist daher günstig, innerhalb eines Verteilkanals den Abstand der Flüssigkeitsaustrittsöffnungen untereinander gleich zu wählen, damit die Flüssigkeit in einer gleichmäßigen Linie auf die Kolonne auftrifft. Ein zu starker, ungünstiger Überlapp oder ein zu großer Abstand der parabelförmigen Strahlprofile voneinander und die daraus resultierenden Flüssigkeitsfehlverteilungen werden so wirkungsvoll vermieden.

Eine noch feinere Verteilung der Flüssigkeit auf den Seitenwänden des U- oder V-förmiges Profils oder auf der Leitwand, und damit auch über dem Kolonnenquerschnitt, wird dadurch erzielt, daß die Seitenwände bzw. die Leitwand mindestens einen in ihrer Längsrichtung verlaufenden Knick aufweisen.

Es hat sich auch als vorteilhaft erwiesen, an der unteren Kante der Seitenwände des U- oder V-förmiges Profils bzw. an der unteren Kante der Leitwand Ablaufzungen vorzusehen. Durch derartige Ablaufzungen werden etwaige herunterfließende Flüssigkeitsanhäufungen, bspw. in Form von Flüssigkeitsfäden, auseinandergerissen und die Flüssigkeitsverteilung so verbessert.

Die Ablaufzungen können dadurch gebildet werden, daß die untere Kante der Seitenwände bzw. der Leitwand zickzackförmig, gewellt oder stufenförmig eingeschnitten ist. Am besten bewährt hat sich ein rechteckförmiger Verlauf der unteren Kante, z. B. durch mehrere äquidistante, rechteckförmige Aussparungen am unteren Ende der Seiten- oder Leitwand.

Die Wirkung der Ablaufzungen wird dadurch zusätzlich verbessert, daß diese gegenüber der Seiten- bzw. Leitwand abgeknickt sind. Die Flüssigkeit, die entlang der Ablaufzungen strömt, besitzt somit eine andere Bewegungskomponente als die Flüssigkeit, die die untere Kante der Seiten- bzw. Leitwand zwischen den Ablaufzungen erreicht und von dieser abtropft. Aufgrund der unterschiedlichen Strömungsrichtungen wird so das Auseinanderreißen der Flüssigkeit noch verstärkt.

Erfindungsgemäß erfolgt die Feinverteilung der Flüssigkeit durch den Zusatzverteiler, die Mengenregelung jedoch durch die Dimensionierungen der Flüssigkeitsaustrittsöffnungen. Durch den beim Bohren der Austrittsöffnungen entstehenden Grat kann es zu Einschnürungen des Flüssigkeitsstrahles und somit zu Ungleichmäßigkeiten der Flüssigkeitsmenge kommen. Aufgrund der hohen Verteilgüte des erfindungsgemäßen Flüssigkeitsverteilers kann die Anzahl der Flüssigkeitsaustrittsöffnungen in den Verteilkanälen deutlich geringer als üblich ausfallen, so daß die Flüssigkeitsaustrittsöffnungen entsprechend größer dimensioniert werden können.Dabei ist es günstig, wenn die effektive Länge der Flüssigkeitsaustrittsöffnungen, die durch den Teil der Flüssigkeitsaustrittsöffnungen festgelegt ist, der im Betrieb von Flüssigkeit benetzt wird, geringer als deren Durchmesser wird, da so die negativen Auswirkungen des Bohrgrates verringert werden.

Bei den bekannten Rohr- oder Kanalverteilern muß für jeden einzelnen Verteilkanal eine spezielle Anordnung der Austrittsöffnungen gewählt werden, um, insbesondere bei einer rechtwinkligen Symmetrie der Verteilkanalanordnung, die rotationssymmetrische Kolonne bestmöglich abzudecken. Die Dichte der Austrittsöffnungen wird daher in den Randbereichen der Kolonne eine andere sein als im Zentrum der Kolonne. Dies hat jedoch zur Folge, daß die Lage der Austrittsöffnungen für jeden Verteilkanal einzeln in Abhängigkeit von dessen Anordnung in der Kolonne bestimmt werden muß.

Erfindungsgemäß wird die Feinverteilung der Flüssigkeit nun nicht mehr durch die Anordnung der Flüssigkeitsaustrittsöffnungen bestimmt, sondern erfolgt im wesentlichen durch den Zusatzverteiler. Es ist deshalb aus fertigungstechnischer Sicht vorteilhaft, in jedem Verteilkanal die gleiche Anordnung der Austrittsöffnungen vorzusehen. Insbesondere ist es von Vorteil, die Flüssigkeitsaustrittsöffnungen so anzuordnen, daß sie zu den benachbarten Austrittsöffnungen in jedem Verteilkanal jeweils den gleichen Abstand besitzen. Das Einbringen der Austrittsöffnungen in die Verteilkanäle muß daher nicht mehr in Einzelfertigung erfolgen und ist somit preisgünstiger.

Es hat sich ebenfalls als vorteilhaft erwiesen, Ablaufzungen mit unterschiedlichen Längen vorzusehen und/oder diese unter verschiedenen Winkeln gegenüber der Seitenwand oder der Leitwand anzubringen. Durch Umbiegen und/oder Verlängern einzelner oder mehrerer Ablaufzungen kann Flüssigkeit gezielt in bestimmte Bereiche hineingelenkt werden. Eine Verlängerung der Ablaufzungen kann beispielsweise dadurch leicht erreicht werden, daß über die Ablaufzunge ein Röhrchen geschoben und mittels einer Quetsch-, Niet- oder Lötverbindung an der Ablaufzunge befestigt wird.

Insbesondere am Rand der Kolonne treten bei der herkömmlichen Verteilung mit Flüssigkeit unter- und überversorgte Zonen auf. Durch das erfindungsgemäße Umknicken oder Verlängern bzw. Verkürzen der Ablaufzungen kann Flüssigkeit aus einem ansonsten überversorgten Bereich in einen ansonsten unterversorgten Bereich umgelenkt werden, so daß eine weitere Vergleichmäßigung der Flüssigkeitsverteilung erzielt wird.

Aus fertigungstechnischen Gründen werden die Zusatzverteiler in Längsrichtung der Verteilkanäle von Vorteil gerade verlaufen. Zur Anpassung an eine runde Kolonnenform hat es sich aber auch als günstig erwiesen, die Verteilkanäle und/oder die Zusatzverteiler entsprechend zu krümmen oder zu knicken. Ebenso kann es bei Füllkörperkolonnen von Vorteil sein, z.B. kreisförmige Verteilkanäle und entsprechend kreisförmige Zusatzverteiler einzusetzen. Auch müssen die Ausrichtung des Verteilkanals und des Zusatzverteilers nicht ganz übereinstimmen. Unter Umständen ist es vorteilhaft, einen leicht gekrümmten Zusatzverteiler unter einem geraden Verteilkanal anzuordnen.

Wird die Erfindung zur Verteilung von Flüssigkeit auf eine geordnete Packung eingesetzt, die aus mehreren parallel zueinander angeordneten, im wesentlichen senkrecht stehenden Lamellen besteht, so werden die Verteilkanäle bevorzugt senkrecht zu den Lamellenoberkanten angeordnet. So wird bereits in der obersten Packungsschicht eine gleichmäßige Flüssigkeitsverteilung erzielt.

Der Einsatz des erfindungsgemäßen Flüssigkeitsverteilers hat sich insbesondere in Stoffaustauschkolonnen zur Tieftemperaturzerlegung von Luft bewährt.

Die Erfindung sowie weitere Einzelheiten der Erfindung werden im folgenden anhand von in den Zeichnungen schematisch dargestellten Ausführungsbeispielen näher erläutert. Hierbei zeigen:
Figur 1 einen erfindungsgemäßen Flüssigkeitsverteiler,
Figur 2 einen Schnitt durch den Verteiler nach Figur 1 entlang der Linie A - A,
Figur 3 einen Zusatzverteiler gemäß der Erfindung.

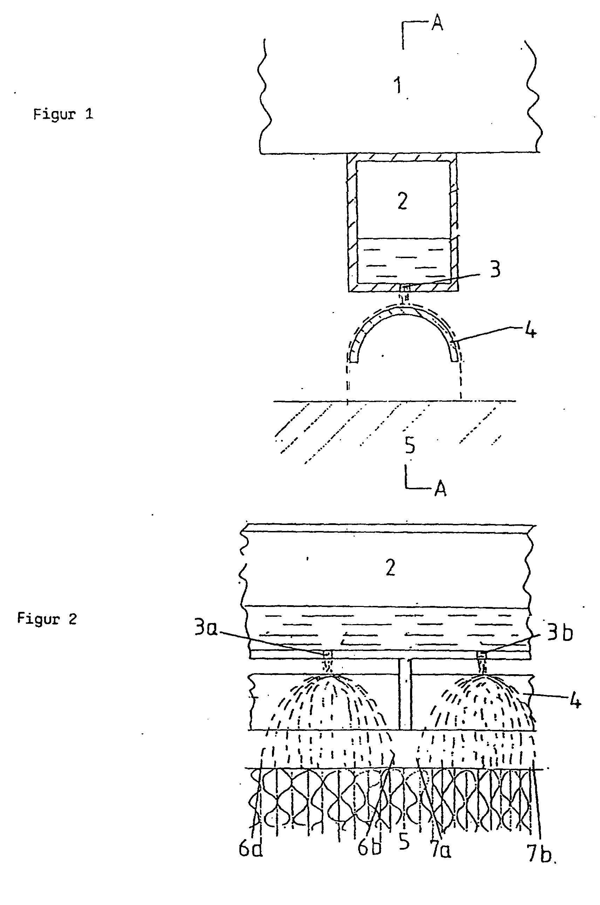

Figur 1 zeigt einen erfindungsgemäßen Flüssigkeitsverteiler mit einem Hauptkanal 1 und mehreren darunter parallel zueinander angeordneten Verteilkanälen 2, die über den Hauptkanal 1 mit Flüssigkeit versorgt werden. Im Boden der Verteilkanäle 2 sind mehrere Flüssigkeitsaustrittsöffnungen 3, 3a, 3b in gleichmäßigem Abstand angeordnet. Die aus den Flüssigkeitsaustrittsöffnungen 3, 3a, 3b austretende Flüssigkeit trifft auf den Scheitel eines unter dem Verteilkanal 2 befestigten, nach unten offenen Halbrohres 4. Die Flüssigkeit fließt auf beiden Seiten des Halbrohres 4 ab und tropft auf die darunterliegende Stoffaustauschpackung 5. In Figur 2 ist deutlich zu erkennen, daß sich der Flüssigkeitsstrahl in Längsrichtung des Halbrohres 4 parabelförmig aufweitet. Der Abstand der Austrittsöffnungen 3a, 3b, die Breite des Verteilkanals 2 sowie der Krümmungsradius des Halbrohres 4 sind so aufeinander abgestimmt, daß zum einen die Breite des Halbrohres 4 die des Verteilkanals 2 nicht überschreitet, zum anderen die beiden Randstrahlen 6b und 7a, die aus benachbarten Austrittsöffnungen 3a, 3b austreten, gerade nebeneinander auf die Packung 5 auftreffen. Auf diese Weise wird die Flüssigkeit durch jeden Verteilkanal 2 auf zwei sich über die Packung erstreckende Linien aufgeteilt. Der Flüssigkeitsverteiler ist so in der Kolonne angeordnet, daß die Verteilkanäle 2 senkrecht zur Hauptausbreitungsrichtung der Packung 5 liegen. Die linienförmig auf die Packung 5 tropfende Flüssigkeit gewährleistet so bereits in der obersten Packungsschicht eine optimale Flüssigkeitsverteilung.

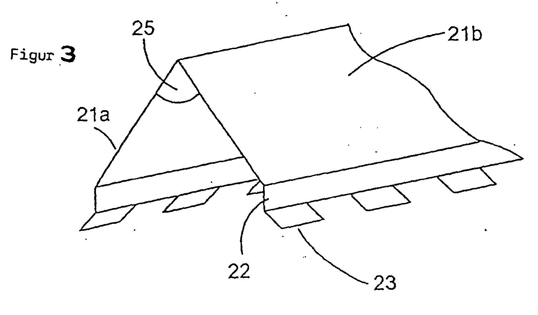

Figur 3 zeigt einen unter dem Verteilkanal 2 angeordneten Zusatzverteilers 4, der anstelle des in den Figuren 1 und 2 dargestellten Halbrohres 4 eingesetzt werden kann und in dem mehrere vorteilhafte Details der Erfindung verwirklicht sind. Die enthaltenen vorteilhaften Details sind selbstverständlich nicht nur in der im folgenden beschriebenen Kombination, sondern auch einzeln oder in Unterkombinationen günstig. Der Zusatzverteiler 4 besteht aus einem geknickten Blech, dessen beide Schenkel 21a und 21b unter einem Winkel 25 von 75° zueinander stehen. Über den Winkel 25 kann die Breite der parabelförmigen Verteilung der Flüssigkeit (siehe Figur 2), d.h. der Abstand der beiden Flüssigkeitsstrahlen 6a und 6b bzw. 7a und 7b, auf den Blechen 21a und 21b eingestellt werden. Je kleiner der Winkel 25 gewählt wird, desto schneller fließt die Flüssigkeit nach unten ab und desto schmaler wird die Flüssigkeitsverteilung auf den Blechen 21a, 21b. Bevorzugt sind die Flüssigkeitsaustrittsöffnungen 3, 3a, 3b im Boden des Verteilkanals 2 alle äquidistant angeordnet. In diesem Fall kann der Winkel 25 so eingestellt werden, daß die aus benachbarten Öffnungen 3a, 3b austretenden Flüssigkeitsrandstrahlen 6b, 7a gerade nebeneinander von dem Zusatzverteiler 4 abtropfen oder daß sich die parabelförmigen Strahlprofile günstig überlappen, so daß sich auf der Packung 5 durchgehende Linien von Flüssigkeit ergeben.

Eine noch feinere Verteilung der Flüssigkeit wird durch die ebenfalls in Figur 4 gezeigten, rechteckigen Ablaufzungen 23 erreicht. Durch diese Ablaufzungen 23 wird der Flüssigkeitsfilm, der sich durch die parabelförmige Aufweitung auf den Blechen 21a und 21b ergibt, aufgerissen, so daß der eine Teil der Flüssigkeit von der Unterkante der Ablaufzungen 23 und der andere Teil zwischen den Ablaufzungen 23 abtropft. Die Flüssigkeit trifft so in vielen einzelnen Strahlen auf die Packung 5 auf.

Die auf den Blechen 21a, 21b ablaufende Flüssigkeit kann noch feiner verteilt werden, wenn die Ablaufzungen 23 gegen die Bleche 21a, 21b geneigt sind. Bevorzugt sind die Ablaufzungen 23 nach außen abgeknickt, so daß sie eine geringere Neigung gegen die Horizontale aufweisen als die Bleche 21a, 21b. Auf diese Weise besitzt die zwischen den Ablaufzungen 23 an die Unterkante der Bleche 21a, 21b fließende Flüssigkeit eine andere Bewegungsrichtung als die auf den Ablaufzungen 23 weiterfließende Flüssigkeit. Ein etwaiger Flüssigkeitsfilm auf den Blechen 21a, 21b wird so noch wirkungsvoller aufgespalten.

Eine weitere Verbesserung der Flüssigkeitsverteilung bringt das Abknicken der Bleche 21a, 21b, so daß sich unmittelbar vor den Ablaufzungen 23 ein weiterer Strömungsabschnitt 22 mit anderer Neigung bildet. Es hat sich als besonders günstig erwiesen, die Bleche 21a, 21b in diesem Abschnitt in etwa senkrecht verlaufen zu lassen.

## Patentansprüche

1. Flüssigkeitsverteiler für eine Stoffaustauschkolonne mit mindestens einem Verteilkanal (2), der mit einem Hauptkanal (1) in Strömungsverbindung steht, und dessen Boden mit Flüssigkeitsaustrittsöffnungen (3, 3a, 3b) versehen ist, **dadurch gekennzeichnet, daß** unter dem Verteilkanal (2) genau ein Zusatzverteiler (4) angeordnet ist, der als eine im wesentlichen parallel zur Längsachse des Verteilkanals (2) und schräg zur Querachse des Verteilkanals (2) angeordnete Leitwand oder als ein im wesentlichen parallel zur Längsachse des Verteilkanals (2) angeordnetes, nach unten offenes U- oder V-förmiges Profil (4) ausgebildet ist.

2. Flüssigkeitsverteiler nach Anspruch 1, **dadurch gekennzeichnet, daß** der Zusatzverteiler (4) die aus den Flüssigkeitsaustrittsöffnungen (3, 3a, 3b) austretende Flüssigkeit in Längsrichtung des Verteilkanals (2) verteilt.

3. Flüssigkeitsverteiler nach einem der Ansprüche 1 oder 2, **dadurch gekennzeichnet, daß** die Breite des Zusatzverteilers (4) die des Verteilkanals (2) nicht überschreitet.

4. Flüssigkeitsverteiler nach einem der Ansprüche 1 bis 3, **dadurch gekennzeichnet, daß** der Winkel (25) zwischen den beiden Schenkeln (21a, 21b) des U- oder V-förmigen Profils (4) 45° bis 120°, bevorzugt 60° bis 90° beträgt.

5. Flüssigkeitsverteiler nach einem der Ansprüche 1 bis 4, **dadurch gekennzeichnet, daß** die Flüssigkeitsaustrittsöffnungen (3, 3a, 3b) in dem Verteilkanal (2) jeweils gleichen Abstand voneinander besitzen.

6. Flüssigkeitsverteiler nach einem der Ansprüche 1 bis 5, **dadurch gekennzeichnet, daß** die Leitwand oder die Seitenwände (21a, 21b) des U- oder V-förmiges Profils (4) mindestens einen in Längsrichtung des Profils (4) verlaufenden Knick (22) aufweisen.

7. Flüssigkeitsverteiler nach einem der Ansprüche 1 bis 6, **dadurch gekennzeichnet, daß** sich an der unteren Kante der Leitwand oder der Seitenwände (21a, 21b) des U- oder V-förmigen Profils (4) Ablaufzungen(23) befinden.

8. Flüssigkeitsverteiler nach Anspruch 7, **dadurch gekennzeichnet, daß** die Ablaufzungen (23) einen Winkel ungleich 180° zu der Leitwand oder der Seitenwand (21a, 21b, 22) aufweisen.

9. Flüssigkeitsverteiler nach einem der Ansprüche 1 bis 8, **dadurch gekennzeichnet, daß** die effektive Länge der Flüssigkeitsaustrittsöffnungen (3, 3a, 3b) geringer als ihr Durchmesser ist.

10. Flüssigkeitsverteiler mit mehr als einem Verteilkanal nach einem der Ansprüche 1 bis 9, **dadurch gekennzeichnet, daß** der Abstand der Flüssigkeitsaustrittsöffnungen (3, 3a, 3b) voneinander in jedem Verteilkanal (2) gleich ist.

11. Flüssigkeitsverteiler nach einem der Ansprüche 7 bis 10, **dadurch gekennzeichnet, daß** Ablaufzungen (23) mit unterschiedlichen Längen und/oder mit verschiedenen Winkeln gegenüber der Seitenwand (21a, 21b, 22) oder der Leitwand vorgesehen sind.

12. Stoffaustauschkolonne mit einer aus mehreren parallel zueinander angeordneten, im wesentlichen senkrecht stehenden Lamellen bestehenden Packung (5) und mit einem Flüssigkeitsverteiler nach einem der Ansprüche 1 bis 11, **dadurch gekennzeichnet, daß** die Verteilkanäle(2) senkrecht zu den Lamellenoberkanten angeordnet sind.

13. Verwendung eines Flüssigkeitsverteilers nach einem der Ansprüche 1 bis 11 in einer Stoffaustauschkolonne zur Tiefiemperaturluftzerlegung.

## Claims

1. Liquid distributor for a mass-transfer column, having at least one distributing channel (2) which is in flow connection with a main channel (1) and of which the base is provided with liquid-outlet openings (3, 3a, 3b), **characterized in that** precisely one additional distributor (4) is arranged beneath the distributing channel (2), this additional distributor being designed as a directing wall arranged essentially parallel to the longitudinal axis of the distributing channel (2) and obliquely to the transverse axis of the distributing channel (2) or as a downwardly open U-shaped of V-shaped profile (4) arranged essentially parallel to the longitudinal axis of the distributing channel (2).

2. Liquid distributor according to Claim 1, **characterized in that** the additional distributor (4) distributes in the longitudinal direction of the distributing channel (2) the liquid which passes out of the liquid-outlet openings (3, 3a, 3b).

3. Liquid distributor according to either of Claims 1 and 2, **characterized in that** the width of the additional distributor (4) does not exceed that of the distributing channel (2).

4. Liquid distributor according to one of Claims 1 to 3, **characterized in that** the angle (25) between the two legs (21a, 21b) of the U-shaped or V-shaped profile (4) is from 45° to 120°, preferably from 60° to 90°.

5. Liquid distributor according to one of Claims 1 to 4, **characterized in that** the liquid-outlet openings (3, 3a, 3b) in the distributing channel (2) are spaced apart from one another by the same distance in each case.

6. Liquid distributor according to one of Claims 1 to 5, **characterized in that** the directing wall or the side walls (21a, 21b) of the U-shaped or V-shaped profile (4) has/have at least one bend (22) running in the longitudinal direction of the profile (4).

7. Liquid distributor according to one of Claims 1 to 6, **characterized in that** discharge tongues (23) are located on the bottom edge of the directing wall or of the side walls (21a, 21b) of the U-shaped or V-shaped profile (4).

8. Liquid distributor according to Claim 7, **characterized in that** the discharge tongues (23) are at an angle other than 180° to the directing wall or the side wall (21a, 21b, 22).

9. Liquid distributor according to one of Claims 1 to 8, **characterized in that** the effective length of the liquid-outlet openings (3, 3a, 3b) is smaller than the diameter of the latter.

10. Liquid distributor having more than one distributing channel according to one of the Claims 1 to 9, **characterized in that** the distance between the liquid-outlet openings (3, 3a, 3b) in each distributing channel (2) is the same.

11. Liquid distributor according to one of Claims 7 to 10, **characterized in that** there are provided discharge tongues (23) of different lengths and/or at different angles to the side wall (21a, 21b, 22) or the directing wall.

12. Mass-transfer column with packing (5) comprising a plurality of essentially vertical lamellae arranged parallel to one another, and with a liquid distributor according to one of Claims 1 to 11, **characterized in that** the distributing channels (2) are arranged perpendicularly to the top edges of the lamellae.

13. Use of a liquid distributor according to one of Claims 1 to 11 in a mass-transfer column for low-temperature air separation.

## Revendications

1. Distributeur de liquide pour une colonne d'échange de matière comprenant au moins un conduit distributeur (2), qui est en liaison d'écoulement avec un conduit principal (1), et dont le fond est pourvu d'ouvertures de sortie de liquide (3, 3a, 3b), **caractérisé en ce qu'**au-dessous du conduit distributeur (2) est disposé précisément un distributeur supplémentaire (4), qui est conçu comme une paroi de guidage disposée sensiblement parallèlement à l'axe longitudinal du conduit distributeur (2) et de façon inclinée par rapport à l'axe transversal du conduit distributeur (2) ou est conçu comme un profilé (4) en forme de U ou de V disposé sensiblement parallèlement à l'axe longitudinal du conduit distributeur (2) et ouvert vers le bas.

2. Distributeur de liquide selon la revendication 1, **caractérisé en ce que** le distributeur supplémentaire (4) distribue le liquide sortant des ouvertures de sortie de liquide (3, 3a, 3b) dans le sens longitudinal du conduit distributeur (2).

3. Distributeur de liquide selon l'une quelconque des revendications 1 ou 2, **caractérisé en ce que** la largeur du distributeur supplémentaire (4) ne dépasse pas celle du conduit distributeur (2).

4. Distributeur de liquide selon l'une quelconque des revendications 1 à 3, **caractérisé en ce que** l'angle (25) entre les deux branches (21a, 21b) du profilé (4) en forme de U ou de V va de 45° à 120°, de préférence de 60° à 90°.

5. Distributeur de liquide selon l'une quelconque des revendications 1 à 4, **caractérisé en ce que** les ouvertures de sortie de liquide (3, 3a, 3b) dans le conduit distributeur (2) présentent entre elles un espacement identique.

6. Distributeur de liquide selon l'une quelconque des revendications 1 à 5, **caractérisé en ce que** la paroi de guidage ou les parois latérales (21a, 21b) du profilé (4) en forme de U ou de V présentent au moins une pliure (22) agencée dans le sens longitudinal du profilé (4).

7. Distributeur de liquide selon l'une quelconque des revendications 1 à 6, **caractérisé en ce que** des languettes d'écoulement (23) se trouvent sur le bord inférieur de la paroi de guidage ou des parois latérales (21a, 21b) du profilé (4) en forme de U ou de V.

8. Distributeur de liquide selon la revendication 7, **caractérisé en ce que** les languettes d'écoulement (23) présentent un angle différent de 180° par rapport à la paroi de guidage ou la paroi latérale (21a, 21b, 22).

9. Distributeur de liquide selon l'une quelconque des revendications 1 à 8, **caractérisé en ce que** la longueur effective des ouvertures de sortie de liquide (3, 3a, 3b) est plus faible que leur diamètre.

10. Distributeur de liquide comprenant plus d'un conduit distributeur selon l'une quelconque des revendications 1 à 9, **caractérisé en ce que** l'espacement des ouvertures de sortie de liquide (3, 3a, 3b) est identique dans chaque conduit distributeur (2).

11. Distributeur de liquide selon l'une quelconque des revendications 7 à 10, **caractérisé en ce que** les languettes d'écoulement (23) sont prévues avec des longueurs différentes et/ou avec des angles différents par rapport à la paroi latérale (21a, 21b, 22) ou la paroi de guidage.

12. Colonne d'échange de matière comprenant une garniture (5) comprenant plusieurs lamelles disposées parallèlement entre elles et sensiblement verticales et avec un distributeur de liquide selon l'une quelconque des revendications 1 à 11, **caractérisée en ce que** les conduits distributeurs (2) sont disposés perpendiculairement aux bords supérieurs des lamelles.

13. Utilisation d'un distributeur de liquide selon l'une quelconque des revendications 1 à 11 dans une colonne d'échange de matière pour la décomposition de l'air de basse température.
